# EUROPEAN PATENT APPLICATION

(11) **EP 2 456 111 A1**
(43) Date of publication of application: **23.05.2012**
(21) Application number: 10799739.7
(22) Date of filing: 01.07.2010
(51) Int. Cl.: H04J 99/00, H04B 7/04, H04J 11/00, H04W 16/28, H04W 28/18

(54) **RADIO BASE STATION APPARATUS AND MODULATING/CODING SCHEME SELECTING METHOD**

(30) Priority: 15.07.2009 JP 2009166671
(71) Applicant: NTT DOCOMO, INC., Chiyoda-ku Tokyo 100-6150 (JP)
(72) Inventor: TAOKA, Hidekazu, Tokyo 100-6150 (JP); SAWAHASHI, Mamoru, Tokyo 100-6150 (JP)
(74) Representative: HOFFMANN EITLE
(86) International application number: PCT/JP2010/061258
(87) International publication number: WO 2011/007680

(57) **Abstract**

It is an object of the present invention to reduce a probability that MCSs including different modulation schemes may be selected and thereby improve a throughput characteristic of an entire system. The present invention includes a CQI information decoding section (101) that decodes a CQI of a downlink transmission stream and an MCS selection section (102) that includes a table (MCS table 1021) that defines a modulation/coding scheme (MCS) according to the CQI of the downlink transmission stream and defines modulation/coding scheme groups including the same modulation scheme and defined so that transmission rates are arranged in ascending order in each of the modulation/coding scheme groups, and selects an MCS of the downlink transmission stream based on the CQI of the downlink transmission stream decoded by the CQI information decoding section (101).

## Description

### Technical Field

The present invention relates to a radio base station apparatus and a modulation/coding scheme selection method, and more particularly, to a radio base station apparatus and a modulation/coding scheme selection method using a multi-input multi-output (MIMO) scheme and an adaptive modulation and coding (AMC) scheme.

### Background Art

In recent years, from the standpoint of faster, large volume radio communication, communication techniques according to a MIMO (Multiple Input Multiple Output) scheme are receiving attention. This MIMO scheme is intended to improve transmission rates and signal quality by causing signals of a plurality of transmission streams to propagate through space in different ways. The receiving side needs to appropriately separate such a plurality of transmission streams to acquire a received signal. A maximum likelihood detection (MLD) signal separation method is known as a signal separation method for realizing optimum characteristics from a plurality of transmission streams.

This MLD signal separation method assumes a symbol group that puts together a plurality of symbols in a plurality of simultaneously transmitted transmission streams, identifies the most likely symbol group from among all possible symbol groups and thereby estimates a plurality of transmitted symbols. To be more specific, a symbol group having the smallest distance (evaluated by the square of a Euclidean distance in a symbol constellation) between an actually received signal and a symbol group affected by a channel variation is assumed to be the symbol group finally detected by the MLD signal separation method.

Furthermore, adaptive modulation and coding (AMC) is performed from the standpoint of improving throughput of the entire system by carrying out transmission at an appropriate transmission rate according to a time-varying channel state in this MIMO scheme. In this AMC, a modulation and coding scheme (MCS) is selected which can achieve a suitable transmission rate according to the channel state.

In the MIMO scheme, a plurality of transmission streams exist and the respective transmission streams are transmitted in different channel conditions (that is, different transmission paths). As a technology for simplifying processing when selecting an MCS for each transmission stream, a technique is proposed which provides an MCS table defined by associating CQIs (Channel Quality Indicator (reception SINR)) with error rate characteristics on the assumption that the same modulation scheme is used for various MCSs and all transmission streams and selects an MCS according to CQIs measured from the respective transmission streams (e.g., see Non-Patent Literature 1).

### Citation List

### Non-Patent Literature

### [Non-Patent Literature 1]

N. Maeda, T. Kataoka, J. Kawamoto, K. Higuchi, and M. Sawahashi, "Experiments on real-time 1Gbps packet transmission using antenna-independent AMC in MIMO-OFDM broadband packet radio access," in Proc. IEEE VTC2005-Fall, vol. 3, pp. 1628-1632, Sept. 2005.

### Summary of Invention

### Technical Problem

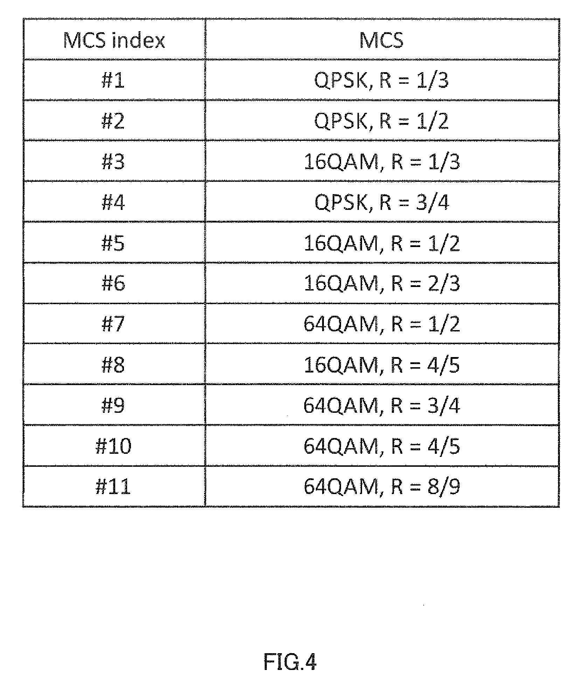

In the MCS table used in the technique described in aforementioned Non-Patent Literature 1, an MCS is generally defined with reference to the transmission rate. FIG.4 is a diagram illustrating an example of MCS defined in a conventional MCS table. In the MCS table shown in FIG.4, combinations of an arbitrary modulation scheme and a coding scheme (coding rate) are defined in ascending order of transmission rates in association with MCS indices (#1 to #11).

For example, in the MCS table, QPSK is defined as the modulation scheme with MCS indices #1, #2 and #4, and 1/3, 1/2 and 3/4 are defined as the coding rate respectively. Furthermore, 16QAM is defined as the modulation scheme with MCS indices #3 and #5, and 1/3 and 1/2 are defined as the coding rate respectively. Furthermore, 16QAM is defined as the modulation scheme with MCS indices #6 and #8, and 2/3 and 4/5 are defined as the coding rate respectively. Furthermore, 64QAM is defined as the modulation scheme with MCS indices #7 and #9 to #11, and 1/2, 3/4, 4/5 and 8/9 are defined as the coding rate respectively. That is, this MCS table defines MCSs with reference to transmission rates obtained in relation to coding rates irrespective of the type of modulation scheme and defines a mixture of MCSs including different modulation schemes.

There are not a small number of cases where CQIs measured from a plurality of transmission streams transmitted in a MIMO scheme are approximate to each other. As with the aforementioned MCS table, when a mixture of MCSs including different modulation schemes are defined, there is a high probability that MCSs including different modulation schemes among the respective transmission streams may be selected. In this case, due to the fact that modulation schemes selected in the respective transmission streams are different from each other, it may be not possible to appropriately estimate a plurality of symbols transmitted during processing of separating received signals, leading to a situation in which a throughput characteristic in the entire system deteriorates.

The present invention has been implemented in view of such circumstances and it is an object of the present invention to provide a radio base station apparatus and a modulation/coding scheme selection method capable of reducing a probability that MCSs including different modulation schemes may be selected and improving a throughput characteristic of the entire system.

### Solution to Problem

A radio base station apparatus according to the present invention includes decoder for decoding a CQI of a downlink transmission stream and selector for selecting, from a table that defines a modulation/coding scheme according to the CQI of the downlink transmission stream and defines modulation/coding scheme groups including the same modulation scheme and defined so that transmission rates are arranged in ascending order in each of the modulation/coding scheme groups, a modulation/coding scheme of the downlink transmission stream based on the CQI of the downlink transmission stream decoded by the decoder.

### Advantageous Effects of Invention

The present invention decodes a CQI of a downlink transmission stream and selects, from a table that defines a modulation/coding scheme according to the CQI of the downlink transmission stream and defines modulation/coding scheme groups including the same modulation scheme and defined so that transmission rates are arranged in ascending order in each of the modulation/coding scheme groups, a modulation/coding scheme of the downlink transmission stream based on the CQI of the decoded downlink transmission stream, and can thereby suppress the occurrence of a situation in which a plurality of transmitted symbols cannot be appropriately estimated during processing of separating received signals due to a difference in the modulation scheme and improve a throughput characteristic of the entire system compared to a case where a mixture of MCSs having different modulation schemes are defined.

### Brief Description of Drawings

FIG.1 is a block diagram showing a configuration of a transmitting section of a radio base station apparatus according to an embodiment of the present invention;
FIG.2 is a block diagram showing a configuration of a receiving section of a mobile station apparatus according to the above-described embodiment;
FIG.3 is a diagram illustrating an example of an MCS table provided for an MCS selection section of the radio base station apparatus according to the above-described embodiment; and
FIG.4 is a diagram illustrating an example of MCS defined in a conventional MCS table.

### Description of Embodiments

Hereinafter, an embodiment of the present invention will be described in detail with reference to the accompanying drawings.
As described above, an MLD signal separation method according to a MIMO scheme assumes a symbol group that puts together a plurality of symbols in a plurality of simultaneously transmitted transmission streams, identifies a symbol group having the smallest distance (evaluated by the square of a Euclidean distance in a symbol constellation) between an actually received signal and a symbol group affected by a channel variation out of all possible symbol groups, and thereby estimates a plurality of transmitted symbols. Thus, to appropriately estimate the plurality of transmitted symbols, it is necessary to clearly identify the symbol group into which symbols are put together.

When identifying the symbol group into which symbols are put together, it is known that if the modulation scheme of the modulation/coding scheme (MCS) selected on the transmitting side is common to a plurality of transmission streams, it is possible to appropriately estimate the plurality of symbols transmitted in the processing of separating received signals, contributing to improvement of a throughput characteristic in the entire system compared to a case where different modulation schemes are used. This is because it is possible to suppress the occurrence of a situation in which a plurality of transmitted symbols cannot be appropriately estimated during processing of separating the received signals due to a difference in the modulation scheme.

Focusing attention on the above-described points, the present inventor et al. came up with the present invention so as to select MCSs including a modulation scheme common to a plurality of transmission streams. That is, an essence of the present invention is to measure a CQI of a downlink transmission stream and select a modulation/coding scheme of the downlink transmission stream based on the CQI of the measured downlink transmission stream from a table that defines a modulation/coding scheme according to the CQI of the downlink transmission stream and defines modulation/coding scheme groups including the same modulation scheme and defined so that transmission rates are arranged in ascending order in each of the modulation/coding scheme groups, and thereby reduce the probability that an MCS including different modulation schemes maybe selected and improve a throughput characteristic of the entire system.

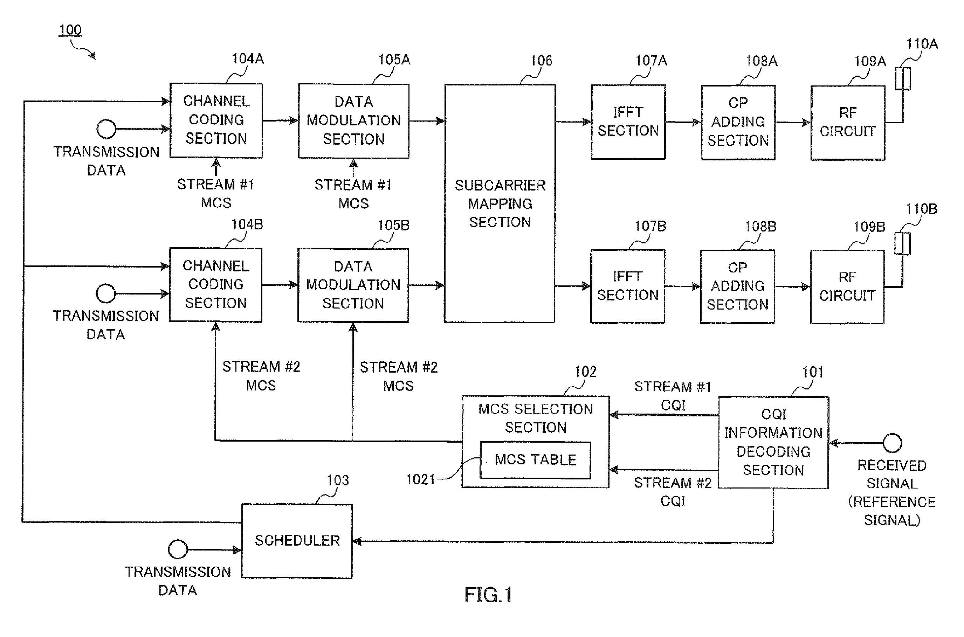

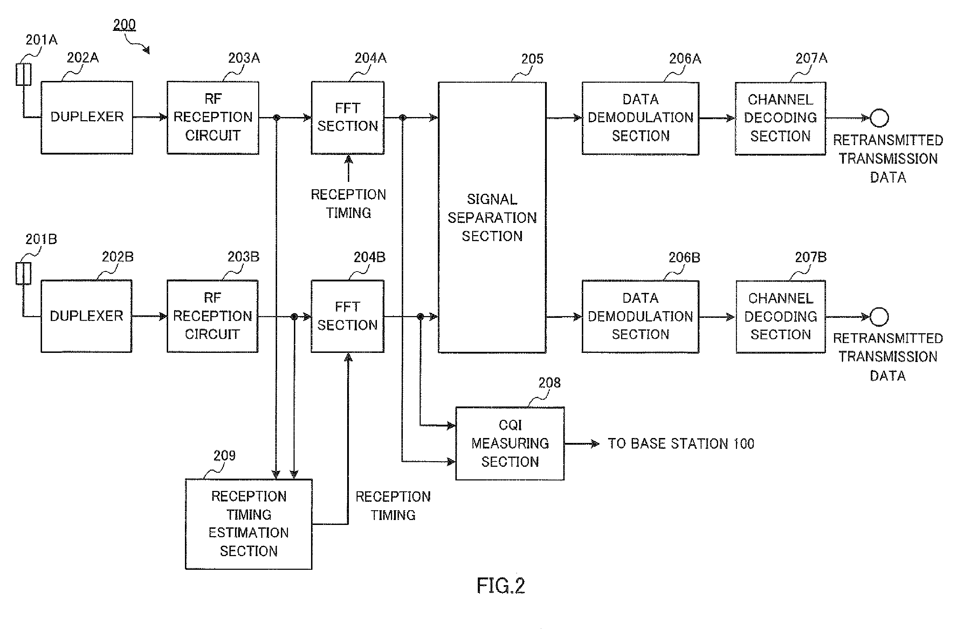

FIG.1 is a block diagram showing a configuration of a transmitting section of a radio base station apparatus (hereinafter referred to as "base station") 100 according to an embodiment of the present invention. FIG.2 is a block diagram showing a configuration of a receiving section of a mobile station apparatus (hereinafter referred to as "mobile station") 200 according to Embodiment 1. The configurations of the base station 100 and mobile station 200 shown in FIG.1 and FIG.2 are simplified to describe the present invention and suppose both stations have the configurations provided for a normal base station and mobile station. Furthermore, a case will be described where both the base station 100 and the mobile station 200 shown in FIG.1 and FIG.2 have two transmitting/receiving antennas respectively, but the present invention is not limited to this and both stations may be provided with three or more transmitting/receiving antennas.

In the base station 100 shown in FIG.1, a reference signal included in a received signal is inputted to a CQI information decoding section 101 that functions as decoder. The CQI information decoding section 101 decodes a CQI regarding a downlink transmission stream (hereinafter simply referred to as "stream") measured from a reference signal for wide band quality measurement in the mobile station 200. In this case, the CQI information decoding section 101 decodes CQIs relating to streams #1 and #2 (stream #1 CQI, stream #2 CQI) fed back from the mobile station 200 and outputs the decoded CQIs to an MCS selection section 102 and a scheduler 103.

The MCS selection section 102 functions as selection means and is provided with an MCS table 1021 that predetermines MCSs according to the CQI values and selects an optimum MCS for each stream according to the stream #1 CQI and stream #2 CQI inputted from the CQI information decoding section 101. The MCS selection section 102 then outputs the selected MCS to a channel coding section 104 and a data modulation section 105 corresponding to each stream, which will be described later. Furthermore, the MCS selected by the MCS selection section 102 is reported to a downlink control signal generation section, included ina downlink control signal generated by this downlink control signal generation section and reported to the mobile station 200 over a downlink.

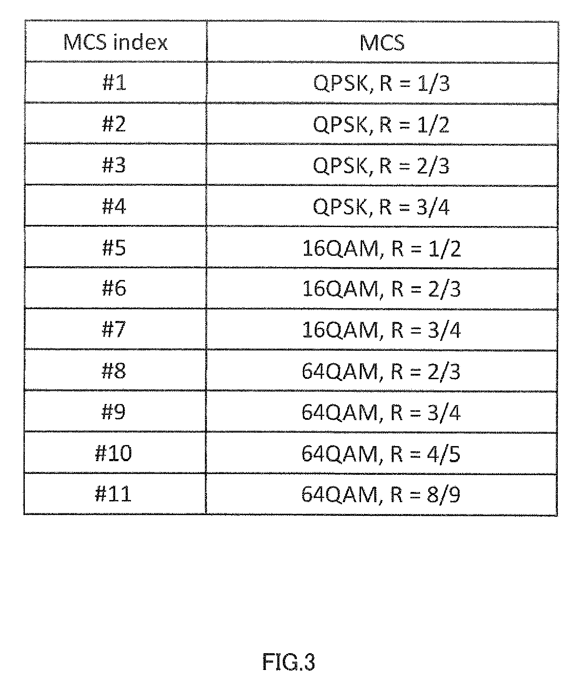

FIG.3 is a diagram illustrating an example of MCSs defined in the MCS table 1021 provided for the MCS selection section 102 of the base station 100 according to the present embodiment. Here, for convenience of explanation, a case is shown where MCSs including QPSK (Quadrature Phase Shift Keying), 16QAM (Quadrature Amplitude Modulation) and 64QAM are defined as data modulation schemes (modulation schemes), but the types of modulation schemes are not limited to these and can be changed as appropriate.

As shown in FIG.3, the MCS table 1021 is common to the conventional MCS table (see FIG.4) in that combinations of modulation schemes and coding schemes (coding rates) are arranged in ascending order of transmission rates in association with MCS indices (#1 to #11). However, the MCS table 1021 is different from the conventional MCS table (see FIG. 4) in that MCSs including different modulation schemes are defined without being mixed with each other.

For example, in the MCS table 1021, QPSK is defined as a modulation scheme with MCS indices #1 to #4 and 1/3, 1/2, 2/3 and 3/4 are defined res as coding rates respectively (QPSK group). Furthermore, 16QAM is defined as a modulation scheme with MCS indices #5 to #7 and 1/2, 2/3 and 3/4 are defined as coding rates respectively (16QAM group). Furthermore, 64QAM is defined as a modulation scheme with MCS indices #8 to #11 and 2/3, 3/4, 4/5 and 8/9 are defined as coding rates respectively (64QAM group).

That is, the MCS table 1021 defines each MCS group including the same modulation scheme in such a way that transmission rates are arranged in ascending order and MCSs including different modulation schemes are not mixed with each other. Thus, the MCS table defines a plurality of MCS groups in such a way that the same modulation scheme is included and transmission rates are arranged in ascending order and defines MCSs so that MCSs having different modulation schemes are not mixed with each other, and it is thereby possible to suppress the occurrence of a situation in which a plurality of transmitted symbols cannot be appropriately estimated during processing of separating the received signal due to a difference in the modulation scheme and contribute to improvement of a throughput characteristic in the entire system.

Furthermore, in the MCS table 1021, compared to the conventional MCS table shown in FIG.4, there are no such MCSs as MCS adopting QPSK as the modulation scheme and 1/3 as the coding rate, MCS adopting 16QAM as the modulation scheme and 1/3 as the coding rate, MCS adopting 16QAM as the modulation scheme and 4/5 as the coding rate or MCS adopting 64QAM as the modulation scheme and 1/2 as the coding rate. On the other hand, there are additional MCSs such as MCS adopting QPSK as the modulation scheme and 2/3 as the coding rate, MCS adopting 16QAM as the modulation scheme and 3/4 as the coding rate and MCS adopting 64QAM as the modulation scheme and 2/3 as the coding rate.

Thus, the MCS table 1021 adjusts coding rates to be combined with modulation schemes and thereby defines a transmission rate of an MCS having the smallest transmission rate among modulation scheme groups having a larger number of information bits (e.g., transmission rate of MCS index #5 and transmission rate of MCS index #8) to be greater than that of an MCS having the largest transmission rate among modulation scheme groups having a smaller number of information bits (e.g., transmission rate of MCS index #4 and transmission rate of MCS index #7). In this way, even when there are a plurality of MCS groups including a plurality of different modulation schemes, it is possible to appropriately define MCSs in ascending order of transmission rates in the MCS table.

Returning to FIG.1, the description of the configuration of the base station 100 will be continued. Transmission data from a higher station apparatus (not shown) that processes a transmission signal is inputted to the scheduler 103. Furthermore, the scheduler 103 also receives the CQI decoded by the CQI information decoding section 101 and a channel estimate value of an uplink estimated by a channel estimation section (not shown) based on a reception state of a reference signal from the mobile station 200 as input. The scheduler 103 performs scheduling of the transmission data with reference to the CQI and channel estimate value.

A channel coding section 104A and a data modulation section 105A constitute part of a downlink shared channel signal (user data) generation section relating to stream #1 and this downlink shared channel signal generation section generates a downlink shared channel signal using transmission data from the above-described higher station apparatus based on the schedule information determined by the scheduler 103. In this downlink shared channel signal generation section, the channel coding section 104A performs channel coding on the transmission data based on the coding rate specified in an MCS relating to stream #1 (stream #1 MCS) from the MCS selection section 102. The data modulation section 105A modulates the transmission data coded by the channel coding section 104A based on the modulation scheme specified in stream #1 MCS from the MCS selection section 102. The transmission data modulated by the data modulation section 105A is subjected to inverse Fourier transform by a discrete Fourier transform section (not shown) to be transformed from a time-sequence signal into a frequency-domain signal and outputted to a subcarrier mapping section 106.

On the other hand, a channel coding section 1048 and a data modulation section 105B constitute a downlink shared channel signal (user data) generation section relating to stream #2 and this downlink shared channel signal generation section generates a downlink shared channel signal using transmission data from the aforementioned higher station apparatus based on the schedule information determined by the scheduler 103. In this downlink shared channel signal generation section, the channel coding section 104B performs channel coding on the transmission data based on the coding rate specified in an MCS relating to stream #2 (stream #2 MCS) from the MCS selection section 102. The data modulation section 105B modulates the transmission data coded by the channel coding section 104B based on the modulation scheme specified in stream #2 MCS from the MCS selection section 102. The transmission data modulated by the data modulation section 105B is outputted to the subcarrier mapping section 106.

The subcarrier mapping section 106 maps the transmission data relating to stream #1 processed by the channel coding section 104A and the data modulation section 105A and the transmission data relating to stream #2 processed by the channel coding section 104B and the data modulation section 105B to subcarriers according to the aforementioned schedule information.

The transmission data relating to stream #1 mapped by the subcarrier mapping section 106 is subjected to inverse fast Fourier transform by an inverse fast Fourier transform section (IFFT section) 107A to be transformed from a frequency-domain signal into a time-sequence signal and then a cyclic prefix is added thereto in a cyclic prefix adding section (CP adding section) 108A. The cyclic prefix functions as a guard interval to absorb a difference in multipath propagation delays. The transmission data with the cyclic prefix is subjected to frequency conversion processing for converting the transmission data to a radio frequency band in a radio frequency (RF) circuit 109A, amplified and then sent to the mobile station 200 over a downlink via an antenna 110A.

On the other hand, the transmission data relating to stream #2 mapped by the subcarrier mapping section 106 is subjected to inverse fast Fourier transform by an IFFT section 107B to be transformed from a frequency-domain signal into a time-sequence signal, then a cyclic prefix is added thereto in a cyclic prefix adding section (CP adding section) 108B. The transmission data with the cyclic prefix is subjected to frequency conversion processing for converting the transmission data to a radio frequency band in an RF circuit 109B, amplified and sent to the mobile station 200 over a downlink via an antenna 110B.

Next, the configuration of the mobile station 200 according to the present embodiment will be described with reference to FIG.2. In the mobile station 200 shown in FIG.2, a transmission signal transmitted from the base station 100 is received by an antenna 201A, electrically separated by a duplexer 202A into a transmission path and a reception path and then outputted to an RF reception circuit 203A. The received signal is then subjected to frequency conversion processing for converting the signal from a radio frequency signal to a baseband signal by the RF reception circuit 203A. Furthermore, a cyclic prefix added to the received signal is removed by a CP removing section (not shown) and then outputted to a fast Fourier transform section (FFT section) 204A.

Similarly, the transmission signal transmitted from the base station 100 is received by an antenna 201B, electrically separated by a duplexer 202B into a transmission path and a reception path and then outputted to an RF reception circuit 203B. The received signal is then subjected to frequency conversion processing for converting the signal from a radio frequency signal to a baseband signal by the RF reception circuit 203B. Furthermore, a cyclic prefix added to the received signal is removed by a CP removing section (not shown) and then outputted to an FFT section 204B.

A reception timing estimation section 209 acquires the received signals outputted from the RF reception circuits 203A and 203B, estimates reception timing (FFT processing timing) from reference signals included in these received signals and reports the estimated reception timing to FFT sections 204A and 204B.

The received signal from the RF reception circuit 203A is subjected to Fourier transform by the FFT 204A according to the reception timing reported from the reception timing estimation section 209 to be transformed from a time-sequence signal to a frequency-domain signal and then outputted to a signal separation section 205. Similarly, the received signal from the RF reception circuit 203B is subjected to Fourier transform by the FFT 204B according to the reception timing reported from the reception timing estimation section 209 to be transformed from a time-sequence signal to a frequency-domain signal and then outputted to the signal separation section 205.

The signal separation section 205 separates the received signals inputted from the FFT sections 204A and 204B using an MLD signal separation method. Thus, the received signal arriving from the base station 100 is separated into a received signal relating to stream #1 and a received signal relating to stream #2. The received signals relating to streams #1 and #2 separated by the signal separation section 205 are demapped by a subcarrier demapping section (not shown) respectively, restored to their respective time-sequence signals, the received signal relating to stream #1 is outputted to a data demodulation section 206A and the received signal relating to stream #2 is outputted to a data demodulation section 206B.

The received signal relating to stream #1 is data-demodulated by the data demodulation section 206A based on a modulation scheme included in an MCS reported from the base station 100, then channel-decoded by a channel decoding section 207A based on a coding rate included in the MCS reported from the base station 100 to reproduce the transmission data. Similarly, the received signal relating to stream #2 is data-demodulated by the data demodulation section 206B based on a modulation scheme included in the MCS reported from the base station 100, then channel-decoded by a channel decoding section 207B based on a coding rate included in the MCS reported from the base station 100 to reproduce the transmission data. The MCS from the base station 100 is acquired from a control signal demodulated by a control signal demodulation section (not shown).

A CQI measuring section 208 measures receiving quality from the reception state of a reference signal included in the received signal outputted from the FFT section 2 04A and measures receiving quality from the reception state of a reference signal included in the received signal outputted from the FFT section 204B. The CQI information in each transmission path measured by the CQI measuring section 208 is reported to an uplink control signal generation section (not shown), included in the uplink control signal generated by this uplink control signal generation section and sent to the base station 100 over an uplink.

Thus, in the base station 100 according to the present embodiment, the MCS selection section 102 provides the MCS table 1021 that defines MCS groups including the same modulation scheme and defined so that transmission rates are arranged in ascending order, selects an MCS corresponding to each stream according to stream #1 CQI and stream #2 CQI inputted from the CQI measuring section 101, and can thereby suppress the occurrence of a situation in which a plurality of transmitted symbols cannot be appropriately estimated during processing of separating the received signal due to a difference in the modulation scheme compared to the case where MCSs of different modulation schemes are mixed with each other and improve a throughput characteristic in the entire system.

The present invention is not limited to the above-described embodiment, but can be implemented modified in various ways. For example, a case has been described in the above-described embodiment where both the base station 100 and the mobile station 200 are provided with two transmitting/receiving antennas, but the present invention is also applicable to a base station 100 and a mobile station 200 provided with three or more transmitting/receiving antennas. Furthermore, the combination of a modulation scheme and coding scheme (coding rate) included in an MCS described above can be modified as appropriate without departing from the scope of the present invention. Other aspects of the present invention can be implemented modified as appropriate without departing from the scope of the present invention.

The present application is based on Japanese Patent ApplicationNo.2009-166671, filedonJulyl5, 2009, entire content of which is incorporated herein by reference.

## Claims

1. A radio base station apparatus comprising:
a decoder for decoding a CQI of a downlink transmission stream; and
a selector for selecting, from a table that defines a modulation/coding scheme according to the CQI of the downlink transmission stream and defines modulation/coding scheme groups including the same modulation scheme and defined so that transmission rates are arranged in ascending order in each of the modulation/coding scheme groups, a modulation/coding scheme of the downlink transmission stream based on the CQI of the downlink transmission stream decoded by the decoder.

2. The radio base station apparatus according to claim 1, wherein the table has a plurality of modulation/coding scheme groups including a plurality of modulation schemes differing in the number of transmittable information bits and defines a transmission rate of a modulation/coding scheme having the smallest transmission rate among modulation scheme groups having a larger number of the information bits to be greater than a modulation/coding scheme having the largest transmission rate among modulation scheme groups having a smaller number of the information bits.

3. The radio base station apparatus according to claim 2, wherein a transmission rate of a modulation/coding scheme having the smallest transmission rate among modulation scheme groups having a larger number of the information bits is defined to be greater than that of the modulation/coding scheme having the largest transmission rate among modulation scheme groups having a smaller number of the information bits by adjusting the coding scheme.

4. A modulation/coding scheme selection method comprising:
a step of decoding a CQI of a downlink transmission stream; and
a step of selecting, from a table that defines a modulation/coding scheme according to the CQI of the downlink transmission stream and defines modulation/coding scheme groups including the same modulation scheme and defined so that transmission rates are arranged in ascending order in each of the modulation/coding scheme groups, a modulation/coding scheme of the downlink transmission stream based on the CQI of the decoded downlink transmission stream.
